(19) Europäisches Patentamt

European Patent Office

Office européen des brevets

(11) EP 1 170 699 A2

(12) **EUROPEAN PATENT APPLICATION**

(43) Date of publication:
09.01.2002 Bulletin 2002/02

(51) Int Cl.7: **G06T 15/20**

(21) Application number: 01305824.3

(22) Date of filing: 05.07.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **06.07.2000 JP 2000204483**

(71) Applicant: **Infiniteface Inc.
New York, NY 10003 (US)**

(72) Inventors:
• **Furuta, Hima
Minato-ku, Tokyo 106-0032 (JP)**
• **Miyazawa, Takeo
Mitaka-shi, Tokyo 181-0013 (JP)**

(74) Representative: **Brown, Kenneth Richard et al
R.G.C. Jenkins & Co. 26 Caxton Street
London SW1H 0RJ (GB)**

(54) **System and method for providing three-dimensional images, and system and method for providing morphing images**

(57) An object of the present invention is to provide an Internet-based marketing tool that is not available in the conventional art. It includes a three-dimensional model database that stores a three-dimensional model pertaining to a target object, a viewpoint setting unit that sets a viewpoint for viewing of the target object, an image generating unit that generates an image of the target object viewed from the set viewpoint based on the three-dimensional model database, a tracking unit that tracks the set viewpoint, and an analyzing unit that performs analysis of the preferences of the user that set the viewpoint position, based on the output from the tracking unit.

FIG.2

**Description**

BACKGROUND OF THE INVENTION

1. Field of the Invention

The present invention relates to a three-dimensional image supply system and method that supply three-dimensional images based on a three-dimensional model of a target object, as well as to a morphing image supply system and method that supply morphing images in which images of different target objects are mixed together.

2. Description of the Related Art

There are many home pages on the Internet, and these pages are viewed by a large number of persons. Although almost all home pages include images, these images are flat images, and users have been unable to freely obtain images viewed from any desired viewpoint. It is thought that if a three-dimensional model were to be generated on a Web server such that a user could freely specify a desired viewpoint, many users would choose to use such a server.

At the same time, while Internet-based marketing has been attracting increasing attention, conventional marketing has consisted only of determining roughly what pages were visited and which banner ads received click-throughs. However, if a user were to be permitted to view a three-dimensional model from any desired viewpoint, the preferences and desires of each user could be analyzed on an individual basis.

An object of the present invention is to provide a three-dimensional image supply system and method and morphing image supply system and method that can provide unconventional marketing methods that have not existed up the present.

SUMMARY OF THE INVENTION

The present invention includes a three-dimensional model database that stores a three-dimensional model pertaining to a target object, a viewpoint setting unit that sets a viewpoint for viewing of the target object, an image generating unit that generates an image of the target object viewed from the set viewpoint based on the three-dimensional model database, a tracking unit that tracks the set viewpoint, and an analyzing unit that performs analysis of the preferences of the user that set the viewpoint positions, based on the output from the tracking unit.

The present invention includes a three-dimensional model generating unit that generates a three-dimensional model pertaining to a target object after receiving two or more images of the same target object viewed from different viewpoints; a three-dimensional model database that stores this three-dimensional model; a viewpoint setting unit that sets a viewpoint for viewing of the target object; and an image generating unit that generates an image of the target object viewed from the set viewpoint based on the three-dimensional model database.

The present invention includes a three-dimensional model generating unit that generates a three-dimensional model pertaining to a target object after receiving two or more images of the same target object viewed from different viewpoints; a viewpoint setting unit that sets a viewpoint for viewing of the target object; and an image generating unit that generates an image of the target object viewed from the set viewpoint based on the three-dimensional model database.

The present invention includes a morphing data generating unit that receives two or more images pertaining to different target objects and seeks the correspondences between these images; a morphing database that stores the two or more images and the correspondences therebetween; a mixture ratio setting unit that sets the mixture ratio for these two or more images; and an image generating unit that generates an image in which the two or more images are mixed according to the set mixture ratio based on the morphing database.

The present invention includes a step for obtaining and transmitting two or more images of the same target object viewed from different viewpoints; a step for generating a three-dimensional model pertaining to the target object based on the two or more images; a step for setting a viewpoint for viewing of the target object; a step for generating an image viewed from the viewpoint based on the three-dimensional model; and a step for transmitting the generated image.

The present invention includes a step for receiving an image processing program and enabling it to be executed on a computer; a step for executing the image processing program and generating a three-dimensional model pertaining to the target object based on two or more images of the same target object viewed from different viewpoints; a step for setting the viewpoint for viewing of the target object; a step for generating an image viewed from this viewpoint based on the three-dimensional model; a step for displaying the generated image; and a step for transmitting information regarding the viewpoint.

The present invention includes a step for generating a three-dimensional image using a three-dimensional model database on a server; a step for creating a message including information on the method by which to access the three-dimensional image; a step for transmitting an e-mail message; a step for receiving an e-mail message; a step for obtaining the three-dimensional image using the specified access method; and a step for displaying the message and the three-dimensional image.

The present invention includes a step for obtaining and transmitting two or more images of different target objects; a step for seeking the correspondences between the two or more images and generating a morphing database; a step for setting the mixture ratio for the two or more images used for morphing; a step for mixing the two or more images based on the morphing database according to the mixture ratio and generating a morphing image; and a step for transmitting the generated image.

BRIEF DESCRIPTION OF THE DRAWINGS

Fig. 1 is a drawing to explain an Embodiment 1 of the present invention;

Fig. 2 shows the construction of the system pertaining to the Embodiment 1 of the present invention;

Fig. 3 is a flow chart of the system pertaining to the Embodiment 1 of the present invention;

Fig. 4 is a drawing to explain the operation of the Embodiment 1 of the present invention, wherein Fig. 4(a) is a plan view, and Fig. 4(b) is a side view;

Fig. 5 is a flow chart of the system pertaining to an Embodiment 2 of the present invention;

Fig. 6 shows the construction of the system pertaining to an Embodiment 3 of the present invention;

Fig. 7 shows the construction of the system pertaining to an Embodiment 4 of the present invention;

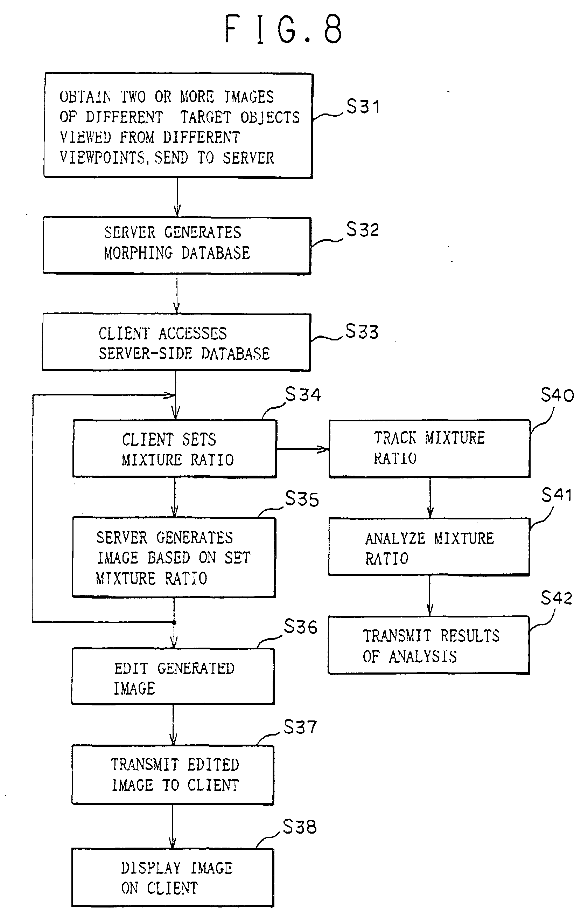

Fig. 8 is a flow chart of the system pertaining to the Embodiment 4 of the present invention;

Fig. 9 is a flow chart showing in a simplified fashion the processing performed by the system pertaining to the embodiments of the present invention;

Fig. 10 is a drawing to explain the operation principle of the system pertaining to the embodiments of the present invention;

Fig. 11 is a drawing to explain the operation principle of the system pertaining to the embodiments of the present invention;

Fig. 12 is a block diagram showing in a simplified fashion the system pertaining to the embodiments of the present invention;

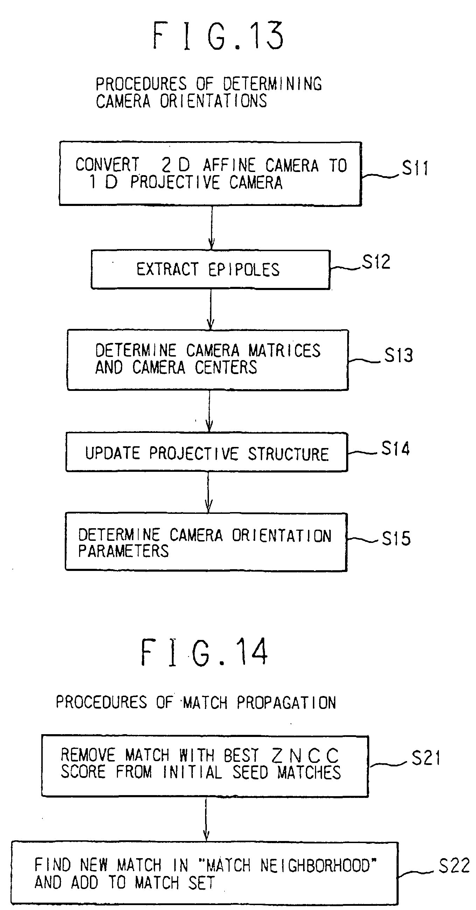

Fig. 13 is a flow chart showing in a simplified fashion the procedure by which the camera direction is determined in the system pertaining to the embodiments of the present invention;

Fig. 14 is a flow chart showing in a simplified fashion the match propagation sequence in the system pertaining to the embodiments of the present invention;

Fig. 15 is a block diagram showing in a simplified fashion another system pertaining to the present invention;

Fig. 16 is a block diagram showing in a simplified fashion another system pertaining to the present invention; and

Fig. 17 is a drawing to explain the morphing principle.

DESCRIPTION OF THE PREFERRED EMBODIMENTS

Embodiment 1

An embodiment of the present invention will now be explained with reference to the drawings.
This system is intended to receive two or more images of the same target object viewed from different viewpoints and sent by the user; to generate a three-dimensional model of the target object from these images; to generate an image of the target object seen from any desired viewpoint based on the three-dimensional model, and to provide the generated image to the user. Alternatively, the system is intended to allow a Web designer to provide a three-dimensional image based on images from the user. The three-dimensional model may be prepared in advance.

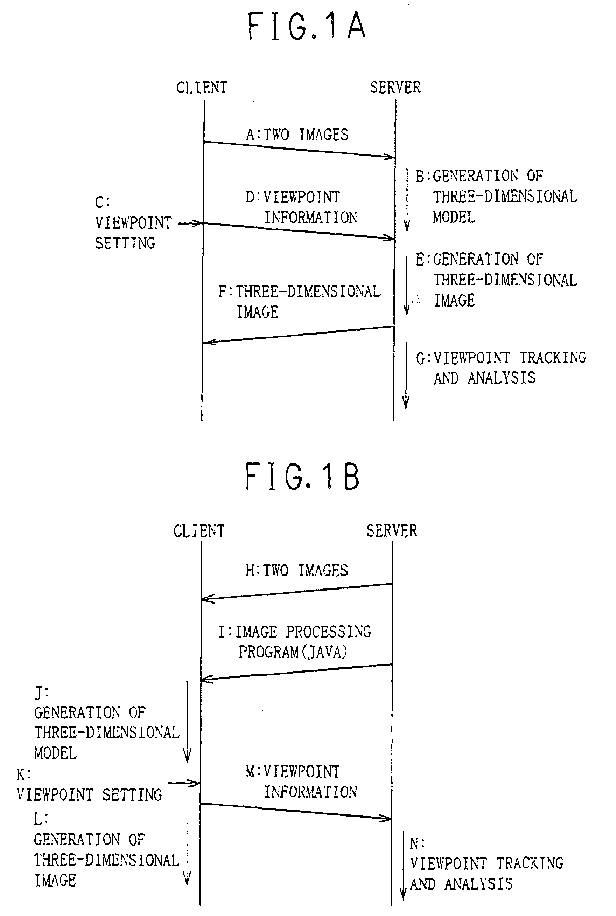

Fig. 1 is a drawing to explain in a summary fashion the operation of an embodiment of the present invention. In Fig. 1(a), the viewpoint data is analyzed after previously-generated three-dimensional data is sent, while in Fig. 1(b), the viewpoint data is analyzed while three-dimensional data is being generated. In other words, Fig. 1(a) shows the case in which the three-dimensional model generating unit resides on the server side, while Fig. 1(b) shows the case in which the three-dimensional model generating unit resides on the client side.
To explain Fig. 1(a), first, the client sends two images to the server (symbol A) and the server generates a three-dimensional model (symbol B). The client sets the viewpoint (symbol C) and sends viewpoint information to the server (symbol D). The server generates a three-dimensional image (symbol E), sends the generated three-dimensional image to the client (symbol F) and tracks and analyzes the viewpoint (symbol G). Where a three-dimensional model already prepared on the server is used, the steps A and B are unnecessary.
To explain Fig. 1(b), first, the server sends to the client two images (symbol H) and a Java-based image processing program (symbol I). The client starts the received program, processes the two images, and generates a three-dimensional model (symbol J). Once the viewpoint is set (symbol K), a three-dimensional image is generated based on the viewpoint (symbol L) and viewpoint information is sent to the server (symbol M). The server then tracks and analyzes the viewpoint (symbol N). Where the two images are prepared on the client side, the step H is unnecessary.

The sequence followed in Fig. 1(b) can carry out three-dimensional display using significantly less data than the process shown in Fig. 1(a). For example, the required data amount can be as little as one-tenth to one-hundredth of the data amount used in the process shown in Fig. 1(a). The reason for this is that in Fig. 1(b), because the server need not send a three-dimensional image to the client, the data amount can be much smaller. Even in the case where three-dimensional data is generated on the client side, by allowing the viewpoint information to be received from the user in real time, the user's viewpoint data can be recorded and analyzed.

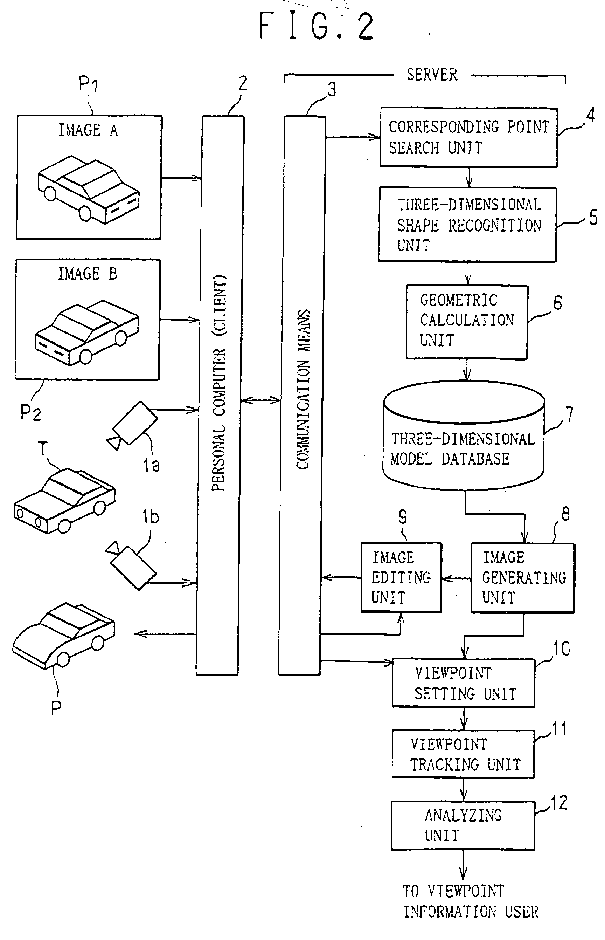

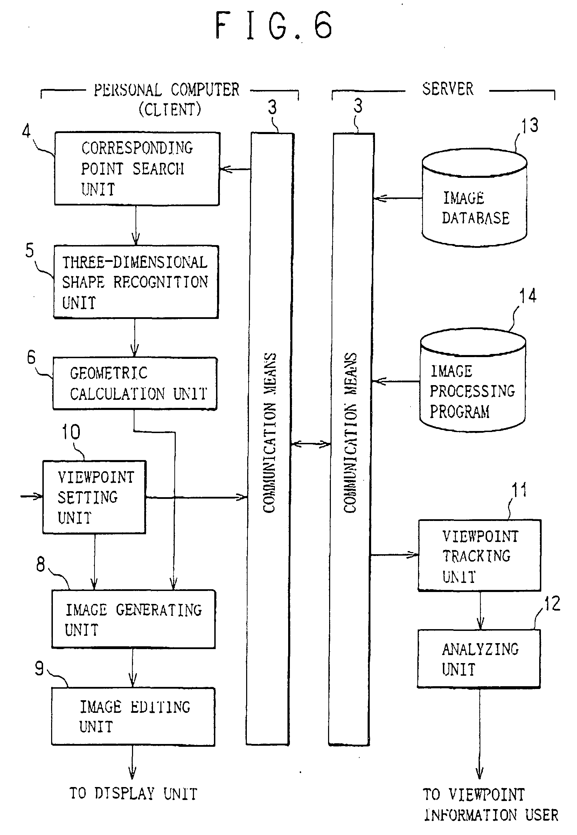

Fig. 2 is a block diagram of the system corresponding to Fig. 1(a), while Fig. 6 is a block diagram of the system corresponding to Fig. 1(b).

Fig. 2 is a functional block diagram of the three-dimensional model/three-dimensional image generating system pertaining to an embodiment of the present invention. Image data P1 and P2 are directly input into the personal computer (client) 2, or alternatively, image data from the cameras 1a and 1b is input. These image data sets comprise images of the same target object viewed from different viewpoints. The input multiple image data sets are sent to the server. In the server, a corresponding point search unit 4 seeks the corresponding points between the multiple images, i.e., the same points on the target object, and a three-dimensional shape recognition unit 5 recognizes the three-dimensional shape of the target object based on the sought corresponding points. A geometric calculation unit 6 restores the three-dimensional shape based on the results of the above recognition. The recognized three-dimensional shape and/or the restored three-dimensional shape are stored in a three-dimensional model database 7. An image of the target object viewed from any desired viewpoint can be generated through reference to the three-dimensional model database 7. The corresponding point search unit 4, the three-dimensional shape recognition unit 5 and the geometric calculation unit 6 will be described in detail below.

When a three-dimensional model of the target object is created, the personal computer (client) 2 sends information regarding the viewpoint from which the target object is to be seen. The viewpoint setting unit 10 in the server receives this data and sets the viewpoint. An image generating unit 8 receives the viewpoint information from the viewpoint setting unit 10 and generates an image of the target object viewed from the set viewpoint with reference to the three-dimensional model database 7. In response to a request from the user, an image editing unit 9 makes prescribed changes to the generated image. The edited image is sent to the personal computer (client) 2. The image P is displayed on the screen of the personal computer 2. This system enables a three-dimensional model to be sought by the server even where only photographs of the target object exist. Once a three-dimensional model is obtained, the user can freely move the viewpoint, enabling the target object to be seen from a desired position, as if the actual object were present.

The image editing unit 9 can make changes in accordance with the wishes of the user. These changes can be made to the generated image or to the three-dimensional model itself. In the former case, while the changes must be made each time the image is generated, because there is no effect on the original model, the changes can be made without concern. In the latter case, once the model is changed, the changes are reflected in all of the subsequently generated images. An example of such a change would be a situation in which the user creates a three-dimensional model of a vintage automobile based only on photographs, and then converts it to a model of a new-model automobile by making changes to the original model, or uses it to do research regarding a new-model automobile. In addition, when used in a beauty simulation, the image editing unit 9 may be used to simulate the application of makeup.

A viewpoint tracking unit 11 monitors the output from the viewpoint setting unit 10 and obtains regularly updated data regarding the position and movement of the viewpoint. The viewpoint tracking unit 11 enables the position from which the target object is being viewed by the user to be easily known. The analyzing unit 12 analyzes the position and movement of the viewpoint for each user, obtains marketing information, and sends it to the user.

This system enables a target object desired by the user (a person, vehicle, model, etc.) to be made into a three-dimensional model, either for a fee or free of charge. Furthermore, user-side operation is exceedingly simple, i.e., the user need only obtain two images. In addition, through the user's setting of any desired viewpoint and sending of a request to the server, an image of the target object viewed from the desired viewpoint can be obtained. In other words, through the user's conversion of a desired target object into a three-dimensional model, the target object can be freely moved or reshaped on a computer, and these different configurations can be saved as images. For example, a user can obtain an image of his own automobile viewed from a preferred angle and combine it with a desired background image, or add a favorite decoration to his own automobile and simulate and enjoy the viewing of the decorated automobile viewed from a desired viewpoint. While the conventional art permits the combining of images captured or shot by the user with a desired background, because these images are invariably flat, and are not viewed from a desired viewpoint, the image after combination with the background appears unnatural. However, because this system uses images viewed from any desired viewpoint, the above flaw in the conventional art is eliminated. Furthermore, by referring to the server on which the three-dimensional model is stored via e-mail, e-mail messages containing three-dimensional images can be used.

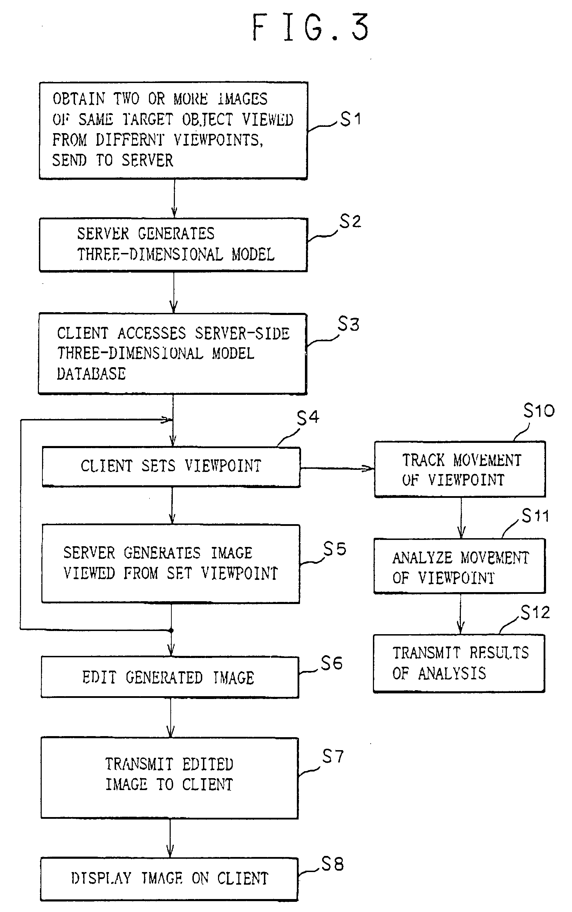

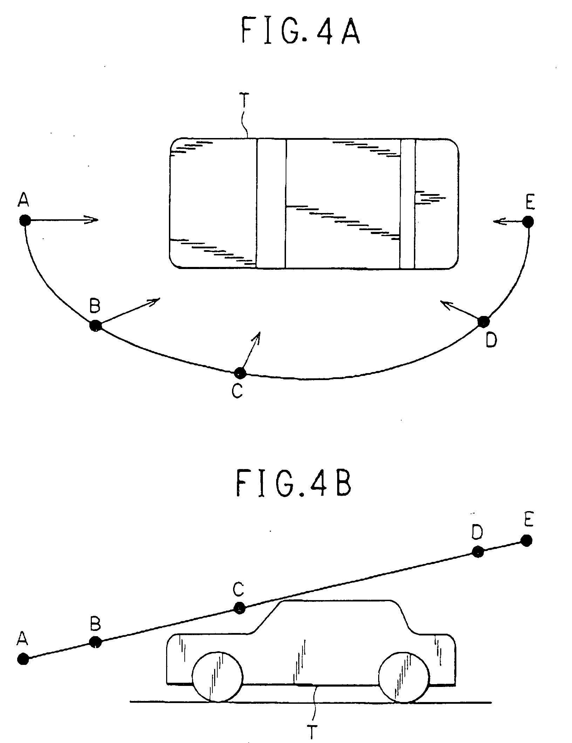

The operation of the system will now be explained with reference to Figs. 3 and 4. The user obtains two or more images of the same target object viewed from different viewpoints and sends them to the server (S1). The server generates a three-dimensional model based on these images (S2). However, where a three-dimensional model has been prepared beforehand, steps S1 and S2 can be eliminated.

The client accesses the three-dimensional model database on the server (S3). The client sets the desired viewpoint (S4), and an image viewed from the set viewpoint is generated by the server (S5). If the generated image is acceptable to the user, the system advances to the next step, and if not, steps S4 and S5 are repeated. In this way, the user can obtain a desired image of the target object by repeating this trial and error process. Because the ideal viewpoint from which to view the target object differs for each user, steps S4 and S5 offer a convenient feature that allows the user to obtain the preferred image. At the same time, by analyzing the positions and movement of the viewpoint, marketing information can be obtained. For example, the user's preferred angle of view of the target object can be learned in connection with the user's age, sex, occupation, personality, hobbies, etc. This type of detailed analysis is unavailable in the conventional art. For example, where the user's viewpoint moves along the locus shown in Fig. 4, and images viewed from points A through E are generated, the user's preferences can be determined through an analysis of this locus. For example, it can be learned that where an automobile is viewed from the front, a low viewpoint is set, indicating that a close-up front view display is desired, while if the automobile is viewed from the rear, a high viewpoint is set, indicating that a display of the entire vehicle is desired. Through an analysis of the viewpoints A through E, the position from which the user wishes the image to be generated can be known. If the last viewpoint selected by the user is determined to be the most desired viewpoint and, such viewpoints are sought for a large number of users and subjected to statistical analysis, the most attractive viewing position for the automobile can be determined. If an automobile design having the best appearance from that position is determined, a vehicle that best matches the preferences of many users can be provided. Alternatively, the viewpoint positions set by a large number of users can be sought and analyzed statistically. The above scenario is only one example offered to enable understanding of the marketing effectiveness of this system. This type of analysis is carried out in steps S10 through S12.

The generated image is edited (S6). The generated image may be sent without further changes to the client, or it may be further edited using digital image processing technology.

For example, it is acceptable if an image is generated from a three-dimensional model of an automobile owned by the user and design changes or options that do not actually exist are added to the generated image, or if a change in the model is simulated and the image of a model of a new style or an older style of automobile is generated.

For another example, a beauty simulation may be performed. In this type of simulation, simulations of makeup, cosmetic surgery, clothing, perfume, accessories, hair style, etc., may be provided based on 3D information. In addition, using the morphing technology described below, information to enable one to resemble one's favorite model may be obtained. For example, intermediate images resembling a cross between oneself and one's favorite model may be created through morphing technology, and the desired image may be selected. The user can learn what percentage of the image comprises her own features and what percentage comprises the model's features. Using this simulation, simulation of not only one's face (the head area) but also one's entire body is possible as well.

The edited image is sent to the client (S7). The image received is displayed on the client's display device.

Next, the processing carried out by the viewpoint tracking unit 11 and the analyzing unit 12 will be explained. Viewpoint information is received from the viewpoint setting unit 10 and the movement of the viewpoint is tracked (S10), and the movement of the viewpoint is analyzed (S11). For example, from the locus formed by the movement of the viewpoint, the height and line of sight can be analyzed. Furthermore, the positions of the set viewpoints and the viewpoint of the last-selected image can be analyzed. The system may be constructed such that when an edited image is to be sent to the client (S7), the image is sent by having the user enter into the system which of the multiple images from the multiple viewpoints is most preferred. For example, a construction may be adopted in which multiple relatively low-resolution images from multiple viewpoints are generated, the images are arranged as image candidates, the most preferred image is selected, and only the selected image is generated as a high-resolution image and sent to the client. Such a construction would ensure that information on the viewpoint most desired by the user is obtained.

The analyzing unit 12 will now be explained in further detail. The analyzing unit carries out the following processes, for example:

(1) Statistical compilation of all consumer Web usage information (number of click-throughs, etc.)

(2) Analysis of viewing information, or analysis of interests, as opposed to purchases

(3) Aggregation of purchasing information, presentation of product preference information in new forms

(4) Analysis of information by age, region, etc.

The analyzing unit 12 extracts, organizes and provides data in order to enable a macroscopic understanding of all user data, based on the contents of a member database not shown in the drawings. All registered users are aggregated, and user characteristics are determined with regard to such basic matters as the total number of registered users, the ratio between males and females, the age group distribution, the geographical distribution, etc. By reviewing such information combined with users' previous behavior on the Web site, such as their responsiveness to questionnaires and the frequency with which they purchase products from the home page, the desired target segment can be known.

When the target segment is clarified, by tailoring basic elements -- such as the method of creating the contents of the system provided via the server 10, the tone and the offered product lines -- to match the preferences of the target segment, the business can be run efficiently. In addition, problems may arise, such as an unexpectedly low number of female registered users where women are the target demographic. In such a case, such countermeasures as heavy placement of banner ads on information sites often accessed by women can be developed.

Multiple versions of e-magazines, in which information on the most appropriate product among the products handled by the system is given front billing, can be prepared for various specific groups and the most appropriate magazine presented to each group. Such a strategy is likely to be more effective than presentation of the same text to all users indiscriminately.

The analyzing unit 12 performs access analysis. 'Access analysis' is the most basic form of analysis that measures how many people visit a site. If the site is a store, access analysis measures how many people visit the store. Through this analysis, analysis from various perspectives such as the increase or decrease in customer traffic by day or hour, the number of persons who window-shop but do not enter the store, or which customers visit which sections of the store.

The system also performs analysis regarding the position from which to view the target object, which could previously be analyzed only by page or by image. In other words, analysis in terms of which image viewpoint is preferred by the user can be performed. Other types of analyses that can be carried out are described below.

Access analysis is performed using the indices of number of hits, PV (page views), and number of visitors.

The number of hits is a value that indicates the number of 'data sets' that were requested to be sent from a particular site. The unit of measurement for 'data sets' here is the number of data files in a computer. If the data set is a home page and the home page includes a large amount of graphic data, the number of hits increases accordingly. Conversely, even if a large amount of information is contained in one page, if that data consists of one text file, it is counted as '1' hit.

A more practical index is PV (page view). It indicates the total number of Internet home pages viewed in connection with a particular site. While this index entails the shortcoming that any single home page counts as 1 PV regardless of the amount of information contained therein, it is a standard index used to measure the value of a medium or the effect of an ad, such as a banner ad, that is displayed on a one-page basis.

There are cases in which the number of PVs associated with the top page of a particular site is deemed the number of visitors. Because PV indicates the number of total viewed pages, the number of different people that have viewed the page cannot be obtained. This index compensates for that shortcoming. Naturally, where one person accesses the top page repeatedly, each access is counted, and therefore, the number of visitors in this case is only an approximate number.

In order to measure the number of visitors more precisely, such methods as a 'cookie' or a 'registration system' must be used.

A cookie not only enables behavior analysis, but is also effective for one-to-one marketing. The use of a cookie allows the behavior of a particular person (or more accurately, the behavior of a Web browser) within the site to be tracked.

For example, suppose it is learned that consumers who request a model change of an automobile using the editing feature are significantly more likely to request brochures than other consumers. If this trend is utilized properly, the target population may be approached more effectively. If a brochure request page is forcibly shown to users who attempt a model change, the rate of brochure requests may be increased substantially.

Through the use of a cookie, information may be provided in a customized fashion that matches each user's behavior and preferences. In order to implement this feature, the site must have cookie issuance and database functions.

While personalization based on the use of a cookie cannot completely specify each individual, a registration system can overcome this shortcoming.

The address, telephone number, e-mail address and name are registered beforehand, and an ID and password used exclusively by the 'total beauty site' are issued. A member accessing a site enters a member-only page when she inputs her ID and password.

By having the users log in, the identity of each user, the pages they visit, and their behavior while logged in can be tracked by the site. At the same time, a page dedicated to the user may be displayed after login.

If the areas of information desired by a user are obtained through responses to a questionnaire distributed at the time of registration, news that matches the user's stated interests may be posted on a particular page.

From not only the registration information, but also from behavior information that indicates the areas of the site most commonly visited by the user, the individual's preferences may be derived and information matching these preferences may be displayed.

Using this system, the Web site provider can investigate what sorts of products are preferred by users from a perspective that is unavailable in the conventional art. In other words, the viewpoint most preferred by the user can be investigated. For example, a particular product can be converted into a three-dimensional model, so that the user can freely decide the viewpoint from which to view the product. The user specifies the viewpoint to the server, and requests an image of the product. The user can obtain an image of the product seen from the desired viewpoint. At the same time, the Web site provider can learn what viewpoints were specified by the user and the manner in which such viewpoints were subsequently changed, by performing analysis based on records stored on the server. The Web site provider can learn which viewpoints are preferred by the user. In the conventional art, images of multiple products or multiple images of one product viewed from multiple viewpoints could be prepared, and it could be learned which product the user preferred, or which viewpoint image the user preferred. However, it could not be determined which viewpoint the user was actually using when the user evaluated the product. In this system, information on 'the user's preferred viewpoint' can be obtained, which was unavailable with the conventional art, enabling such information to be used for marketing purposes.

Examples of specific applications of the system will now be explained.

(1) Beauty simulation

A three-dimensional model of one's own appearance is generated. The generated three-dimensional model is edited (by adding makeup). The user views the edited three-dimensional model from various angles and observes the effect of the makeup. If the user does not like the result, the three-dimensional model is edited once more, and the user once again observes the result. A more realistic simulation is obtained than can be performed with the conventional art.

Cosmetic manufacturers and beauty salons can accurately learn the preferences of users. In other words, they can learn not only which makeup was preferred during editing of the three-dimensional model, but also which viewpoint during viewing of the user's appearance the user was most concerned about. Learning the preferred viewpoints of users may enable cosmetic product manufacturers to develop and sell products that will most enhance the appearance of prospective users from the preferred viewpoint.

(2) Property simulation

An internal three-dimensional model of property to be sold is generated. The user observes how rooms look from various angles while freely moving within the three-dimensional model. The user can obtain perspectives of the property that simply cannot be obtained from a plan view, or the limited photographs included in a brochure.

A property seller can learn the parts of the property to which users paid the most attention, and how users moved within actual rooms. This information allows property that meets the real needs of users to be provided.

(3) Virtual eye camera

An eye camera is a camera that records the movement of a line of sight, and is used in advertising research. By using the viewpoint tracking function offered by this system, a virtual eye camera may be realized. A three-dimensional model of a product, etc. comprising the object of research is prepared, the user is allowed to freely access the model, and the product, etc. can be viewed from any viewpoint. The user freely sets the viewpoint using a mouse, etc., and the server records the setting and movement of the viewpoint each time a setting is made and the viewpoint is moved. If the setting status of the viewpoint is associated with the three-dimensional model of the product, etc., information identical to that obtained from a conventional eye camera can be obtained. An advantage of this system is that the user does not have to continuously wear the eye camera apparatus. As a result, viewpoint information for a large number of users can be obtained extremely easily.

Embodiment 2

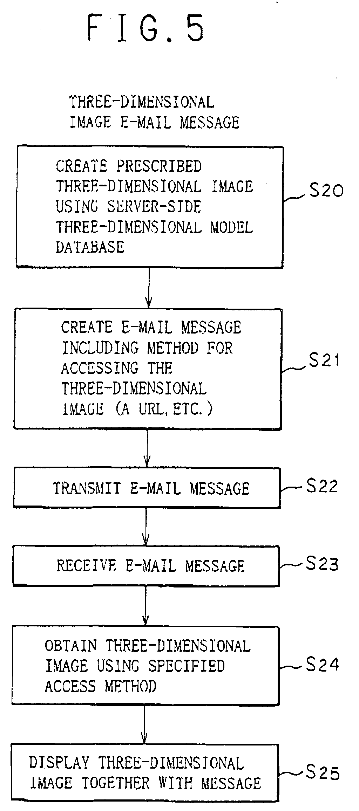

When the system of an Embodiment 2 of the present invention is applied, three-dimensional image e-mail can be sent. A flow chart of this process is shown in Fig. 5.

As explained in connection with the Embodiment 1, a three-dimensional model is generated through the sending of two images to the server (S20). A message including the method for accessing this three-dimensional model (a URL, etc.) is created (S21). The created message is sent (S22).

After receiving the message (S23), the recipient accesses the server using the access method included in the message, and obtains a desired image based on the three-dimensional model (S24). When this process is carried out, it goes without saying that the viewpoint may be freely set. The three-dimensional image is displayed together with the message (S25). Alternatively, display of the message may be omitted.

Through the process described above, a three-dimensional image e-mail message can be sent. This process enables a much smaller amount of data to be sent compared to the direct sending of three-dimensional image data. The recipient can view the target object from any desired angle, and more detailed information can be obtained than is available from a conventional two-dimensional image.

Embodiment 3

A block diagram of the system corresponding to Fig. 1(b) is shown in Fig. 6. The number 13 indicates an image database in which the two images to be sent to the client are stored. The image database 13 stores two images of various target objects seen from different viewpoints. The number 14 indicates an external memory device (memory) in which an image processing program to be sent to the client is stored. The other parts are the same as those shown in Fig. 2, and description thereof will be omitted.

Embodiment 4

An Embodiment 4 of the present invention will now be explained with reference to the drawings.

In this system, the user sends two or more images pertaining to different target objects, morphing processing is performed based on these images, and a morphed image is generated and provided to the user. Alternatively, the images used for morphing may be prepared in advance.

Morphing is a computer graphics (CG) technology developed in Hollywood, U.S.A. According to this method, two different images are used, for example, images of the faces of two persons, and one of the images is gradually changed on the screen to the other image, thereby providing a series of images showing such change. Using the morphing technology, it is possible to create a series of images in which, for example, a white tiger turns into a young woman.

When two images A and B are given, the morphing process is roughly as follows. First, the corresponding feature points between image A and image B are obtained (e.g., eye and eye, nose and nose). This process is normally performed by an operator- When the correspondences are found, feature point p of image A is gradually changed in a time-consuming process to feature point q of image B, resulting in the image series as described above.

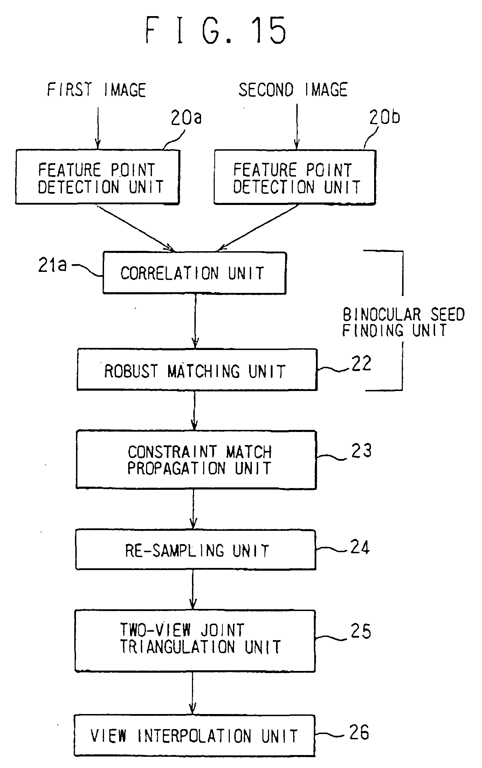

In CG, an image is generally made of a large number of triangular elements. Therefore, morphing is performed by changing the triangle of feature point p in image A to the triangle of feature point q in image B while maintaining the correspondence between them. This will be described further with reference to Fig. 15. In this figure, triangle A is part of image A, and triangle B is part of image B. The apexes p1, p2, p3 of triangle A each correspond to apexes q1, q2 and q3 of triangle B. In order to convert triangle A to triangle B, the differences between p1 and q1, p2 and q2, and p3 and q3 are calculated, and then respectively added to each of the apexes p1, p2, p3 of triangle A. By adding all (100%) of these differences, triangle A is converted to triangle B. It is also possible to add portions of these differences instead of the whole differences, e.g., 30% or 60% thereof. In such case, the intermediate figures between triangle A and triangle B can be obtained. For example, in Fig. 15, triangle A' is a model example of an addition of 30% of the difference, and triangle B' is a model example of an addition of 60% of the difference. For purposes of convenience, this calculated ratio is referred to in the following explanation as a mixture ratio.

In this system, the correspondences between several hundred feature points are automatically obtained by the corresponding point search unit 4. The morphing database 7 stores data for a large number of triangles in connection with image A, data for a large number of triangles in connection with image B, and the corresponding points therebetween.

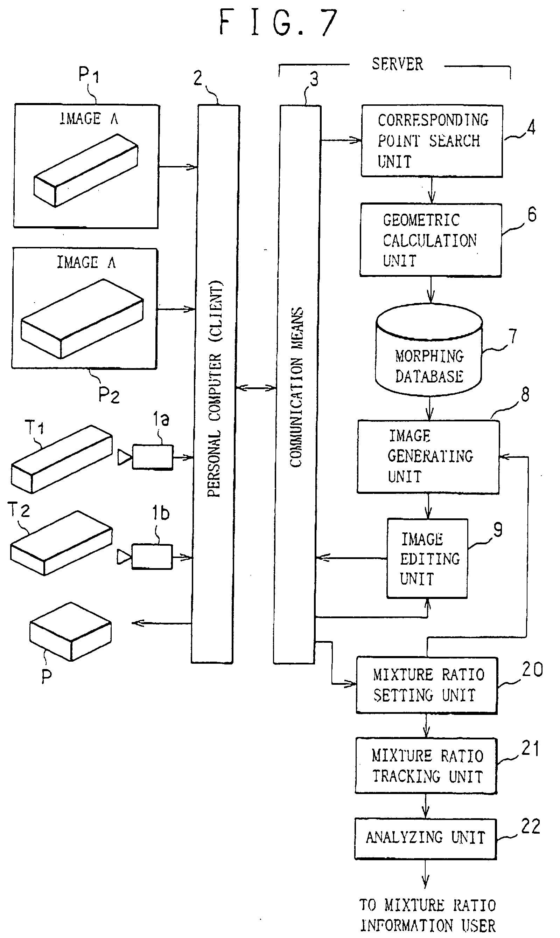

Fig. 7 is a functional block diagram of the three-dimensional model/three-dimensional image generating system pertaining to the embodiments of the present invention. Image data sets P1 and P2 are input directly into the personal computer (client) 2, or alternatively, image data sets from the cameras 1a and 1b are input. These image data sets are of different target objects. The multiple input image data sets are sent to the server. In the server, the corresponding point search unit 4 seeks the corresponding points between the multiple images, i.e., the points on the target objects that correspond. The geometric calculation unit 7 restores the images. The multiple images and the correspondences therebetween are stored in the morphing database 7. The multiple images and mixed images are generated with reference to this morphing database 7. The corresponding point search unit 4 and the geometric calculation unit 6 will be explained in detail below.

When the correspondences are established, the personal computer (client) 2 sets a mixture ratio using the mixture ratio setting unit 20. The server-side image generating unit 8 receives this data and generates an image with reference to the morphing database 7. The image editing unit 9 makes prescribed changes to the generated image in accordance with the requests of the user. The edited image is sent to the personal computer (client) 2. The image P is then displayed on the screen of the personal computer 2.

The processes performed by the mixture ratio tracking unit 21 and the analyzing unit 22 will now be described. It receives mixture ratio information from the mixture ratio setting unit 20 and tracks the changes in the mixture ratio. The analyzing unit 22 analyzes the changes in the mixture ratio. For example, a construction may be adopted in which, when the edited image is sent to the client, the image is sent to the user after the user is asked to input the preferred mixture ratio.

The analyzing unit 22 extracts, organizes and provides data enabling a macroscopic view of all user data based on the contents of a member database not shown in the drawings. All registered users are aggregated, and user characteristics are determined with regard to such basic matters as the total number of registered users, the ratio between males and females, the age group distribution, the geographical distribution, etc., and the desired images are analyzed based on the mixture ratio. By reviewing such information while combining it with users' previous behavior, the desired target segment can be known.

This system has potential applications in a number of different fields. Some of these applications are as follows.

(1) Morphing between two target objects for fun

(2) Deformation of a target object by incorporating elements of one target object into a different target object

(3) When trying to make oneself resemble a celebrity, determining what parts of one's appearance should be changed and by how much, and determining what types of makeup should be used, if any

(4) When deciding on one's ideal hairstyle and appearance, combining celebrity images

CORRESPONDING POINT SEARCH UNIT, THREE-DIMENSIONAL SHAPE RECOGNITION UNIT AND GEOMETRIC CALCULATION UNIT

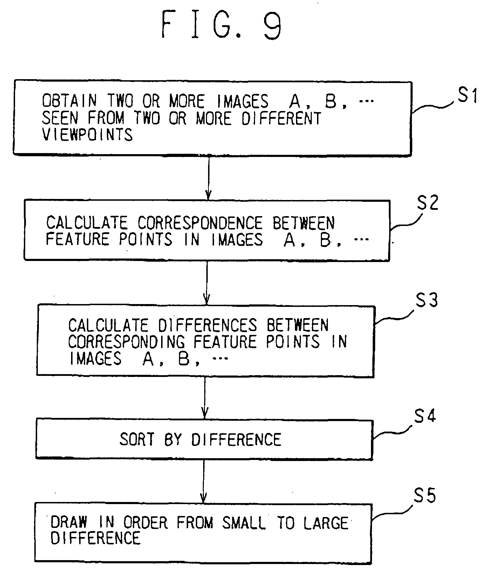

Now, the processing of these sections according to an embodiment of the present invention will be described in outline. According to the flowchart in Fig. 9, two or more images A, B,... from two or more different viewpoints are obtained (S1).

Next, the correspondence between feature points in image A and image B is calculated (S2). Feature points may be edges, corners, texture, etc. One way of searching a point in one image corresponding to the feature point in another image is to use the local density pattern in the area around such point. According to this method, a window is set around the feature point of the other image, and this window is used as a template for performing matching within a predetermined search range along the epipolar line of the one image. According to another method, features such as the edges of light and shade are extracted from the image and correspondence for such features is found between the images.

The difference between corresponding feature points in image A and image B is calculated (S3). If the correspondence between these feature points in both images is calculated, the difference can be found very easily. Through this processing, the extraction of the necessary features points and the difference between them (amount of change) can be gained as required for the morphing process.

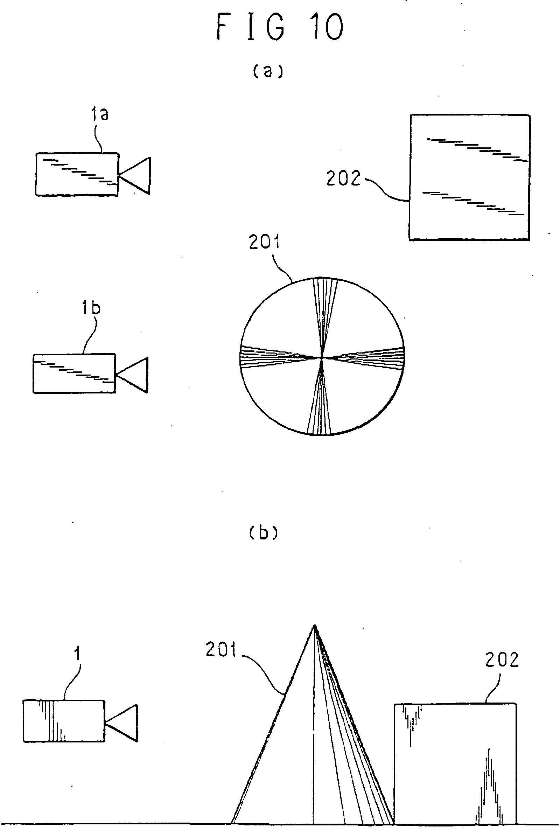

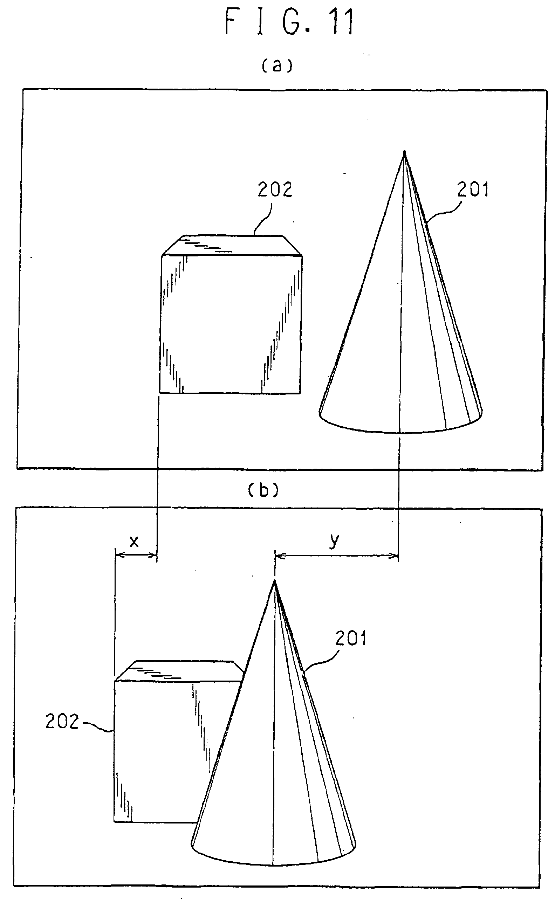

The movement principle will be described by using Figs. 10 and 11. As shown in Figs. 10(a) and (b), a cone 201 and a cube 202 are arranged within a certain space and shot by two cameras 1a and 1b. As the viewpoints of cameras 1a, 1b differ, the obtained images are also different. The images obtained by cameras 1a, 1b are as shown in Figs. 11(a) and (b). Comparing these two images, it is clear that the positions of cone 201 and cube 202 are different. Assuming that the amount of change in the relative position of cone 201 is y, and that of cube 202 is x, then Fig. 11 shows that x<y. This is due to the distance between the object and the cameras. If the values of x and y are large, the feature points are near the camera. On the other hand, if such values are small, the feature points are far from the camera. In this way, the distances between the object and the cameras are clear from the differences between corresponding feature points in the different images. Utilizing this characteristic, the feature points are sorted according to the differences (S4), and the images are written in order from that with the smallest difference (meaning the image shot by the camera farthest to the object) to the largest difference (S5). Portions near the camera are overwritten and displayed, but portions far from the camera (hidden portions) are deleted through the overwriting- In this way, it is possible to adequately reproduce an image in three-dimensional space without using depth information.

Explanation of Terms

- Epipolar Geometry

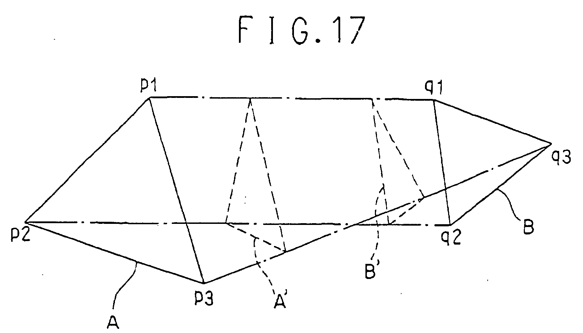

When an object in a three-dimensional space is projected by a plurality of cameras, geometry unique to the plurality of images can be found. This is called the epipolar geometry. In Fig. 17, X is a point within a three-dimensional space, C and C' are viewpoints, π and π' are projection planes, Σ is the epipolar face defined by C, C' and X, straight line L is the epipolar line gained by intersecting the epipolar plane with the image face π, and points e, e' are epipoles gained by intersecting the straight line connecting viewpoints C and C' with the image faces π and π'.

- Delaunay Triangulation

A Delaunay triangulation is a method of dividing a group of arbitrarily set points of tangency into triangles in the two-dimensional space and into tetrahedrons in the three-dimensional space. It is known that the circumscribed circle of all elements gained through this method contains no other points of tangency in its interior. In two-dimensional space, there are various ways of triangulating an aggregate of given points. Desirable is a method of dividing the points into shapes nearest equilateral triangles, without including any crushed triangles. Among the several methods satisfying this condition, a triangulation method is common that is based on the minimum angle maximum principle, according to which the minimum angle of the divided triangle group should be larger than the minimum angle of other division methods. Thereby, it is generally possible to perform unique triangulation. This method is called the Delaunay triangulation. Specifically, the circumscribed circle of the triangles gained from the two triangulation methods for four given points is prepared, and the method that fulfills the condition that the other point is not included in the interior of the circumscribed circle is selected.

The processing above includes a processing of determining the position of an object within a three-dimensional space by calculating the correspondence of feature points between a plurality of images. A processing apparatus/method for this processing will be hereinafter referred to as the facial image generator. This will be now described in further detail.

The facial image generator conducts its processing using three cameras and a trifocal tensor suited as constraint. The scenery generator conducts its processing using two cameras and the epipolar geometry as constraint. Conventionally, it was difficult to find correspondences only by comparing the three images of the three cameras, but by using the space constraints of the three cameras, the correspondence search can be performed automatically.

Facial Image Generator

An example of the processing of three images with different viewpoints from three cameras will be described below.

1. Feature point detection unit

Three images with different viewpoints are input into three feature point detection units 10a to 10c. Feature point detection units 10a to 10c outputs a list of feature points also called points of interest. If the object has a geometrical shape such as triangles or squares, the apexes thereof are the features points. In normal photograph images, points of interest are naturally good candidates for feature points as points of interest are by their very definition image points that have the highest textureness.

2 Seed finding unit

Correlation units 11a and 11b and a robust matching unit 12 make a seed finding unit. This unit functions to find an aggregate of initial trinocular matches (constraint of the positions of three cameras) that are highly reliable. Three lists of points of interest are input into this unit, and the unit outputs a list of trinocular matches of the points of interest called seed matches. Correlation units 11a and 11b establish a list of tentative trinocular matches. Robust matching unit finalizes a list of reliable seed matches using robust methods applied to three view geometric constraints.

2.1 Correlation unit

The movements of correlation units 11a and 11b will be described below. These units perform the processing of three lists of points of interest in three images output from feature point detection unit 10a to 10c. The ZNCC (zero-mean normalized cross-correlation) correlation measure is used for finding correspondences. By using the ZNCC correlation measure, it is possible to find the correspondence between images even if the size of the object is somewhat different between such images or the images are somewhat deformed. Therefore, the ZNCC correlation is used for matching seeds. The $ZNCC_x(\Delta)$ at point $x = (x,y)^T$ with the shift $\Delta = (\Delta x, \Delta y)^T$ is defined to be:

$$\frac{\Sigma_i(I(x+i) - \bar{I}(x))(\bar{I}'(x+\Delta+i) - \bar{I}'(x+\Delta))}{(\Sigma_i(I(x+i) - \bar{I}(x))^2\Sigma_i(I'(x+\Delta+i) - \bar{I}'(x+\Delta))^2)^{1/2}}$$

where $I^-(x)$ and $I^-'(x)$ are the means of pixel luminances for the given window centered at x.

2.2 Robust matching unit

Next, the binocular matches from correlation unit 11 are merged into one single trinocular match by robust matching unit 12. Robust matching unit 12 receives input of a list of potential trinocular matches from correlation unit 11 and outputs a list of highly reliable seed trinocular matches. A robust statistics method based on random sampling of each trinocular matches in three images is used to estimate the 12 components of the three-view constraints to remove the outliers of trinocular matches. When the same object is shot by three cameras and three images from different viewpoints are gained, the same point in the object in each of the three images (e.g., position of feature point) can be uniquely defined from the position of the object, the camera position and the camera direction according to certain rules. Therefore, by determining whether the points of interest in the list of trinocular matches gained from correlation unit 11 satisfies such rules, it is possible to obtain the list of points of interest of the correct trinocular matches.

Given u = (u,v), u' = (u',v') and u" = (u",v") the normalized relative coordinates of the trinocular matches, the three-view constraints are completely determined by the following 12 components $t_1$ to $t_{12}$:

$$t_4 \, u + t_8 \, v + t_{11} u' + t_9 \, u" = 0,$$

$$t_2 \, u + t_6 \, v + t_{11} \, v' + t_{10} \, u" = 0,$$

$$t_3 \, u + t_7 \, v + t_{12} \, u' + t_9 \, v" = 0,$$

$$t_1 \, u + t_5 \, v + t_{12} \, v' + t_{10} \, v" = 0.$$

3 Unit of auto-determination of camera orientations

Now, a camera orientation auto-determination unit 13 will be described below. The classical off-line calibration of the whole system is hardly applicable here even though 3 cameras may be a priori fixed, but their orientations could be still variable. Therefore, camera orientation auto-determination unit 13 determines the camera orientation in order to constrain the match propagation. In other words, camera orientation auto-determination unit 13 receives input of a list of seed matches from robust matching unit 12 and outputs the orientation of the camera system.

Now, the basic ideas of camera orientation auto-determination unit 13 will be described below. At first, the three-view constraints $t_1,.., t_{12}$ are optimally re-computed by using all trinocular inlier matches. The extraction of camera orientations directly from the three-view constraints for later usage is based on an original observation that the problem of affine cameras is converted into a nice problem of 1D projective cameras.

For those skilled in the art, it is evident that an elegant 1D projective camera model first introduced in L. Quan and T. Kanade "Affine structure from line correspondences with uncalibrated affine cameras" IEEE Transactions on Pattern Analysis and Machine Intelligence, 19(8): 834-845, August 1997 occurs on the plane at infinity for the usual affine cameras. All directional quantities are embedded on the plane at infinity, therefore encoded by the 1D projective camera. The 1D camera is entirely governed by its trifocal tensor $T_{ijk}$ (providing a strong constraint) such that $T_{ijk} u^i u'^j u"^k = 0$.

From the above aspects, the procedure of determining the camera orientations according to the present embodiment is as follows.
S11; Convert 2D affine cameras into 1D projective cameras Using tensor-vector mapping defined by 4(a - 1) + 2(b - 1) + c -> i between the tensor components and the three-view constraint components converts the triplet of affine cameras represented by $t_i$ into the triplet of 1D cameras represented by $T_{abc}$. S12: Extraction of epipoles
The 1D camera epipoles can be extracted from the tensor by solving, for instance, $|T_{\cdot jk} e_2| = 0$ for the epipoles e2 and e3 in the first image. The other epipoles can be similarly obtained by factorizing the matrix $T_{i \cdot k} e'_1$ for $e'_2$ and $e'_2$ and $T_{\cdot jk} e"_1$ for $e"_1$ and $e"_2$.
S13: Determination of camera matrices M' = (H, h) and M" = (H', h') and the camera centers c, c' and c"
It is first straightforward that h = $e'_1$ and h' = $e"_1$. The homographic parts of the camera matrices are determined from $T_{ijk} = H_i^j h^k - h'^j H'^k_i$. Then, the camera centers and the 2D projective reconstruction can be determined from the camera matrices as their kernels.
S14: Update of the projective structure
The known aspect ratio for the affine camera is equivalent to the knowledge of the circular points on the affine image plane. The dual of the absolute conic on the plane at infinity could be determined by observing that the viewing rays of the circular points of each affine image plane are tangent to the absolute conic through the camera center.
S15: Determination of camera orientation parameters
Transforming the absolute conic to its canonical position therefore converts all projective quantities into their true Euclidean counterparts. Euclidean camera centers give the orientation of the affine cameras and the affine epipolar geometry is deduced from the epipoles.

4. Constraint match propagation unit

Now, a constraint match propagation unit 14 for expecting a maximum number of matches in three images will be described below. This unit 14 receives input of a list of seed matches and camera orientation parameters from camera orientation auto-determination unit 13 and outputs dense matching in three images.

After obtaining the initial seed matches, it comes the central idea of match propagation from the initial seed matches. The idea is similar to the classic region growing method for image segmentation based on the pixel homogeneity. The present embodiment adopts region growing to match growing. Instead of using the homogeneity property, a similarity measure based on the correlation score is used. This propagation strategy could also be justified as the seed matches are the points of interest that are the local maxima of the textureness, so the matches could be extended to its neighbors which have still strong textureness though not a local maxima.

All initial seed matches are starting points of concurrent propagations. At each step, a match (a, A) with the best ZNCC score is removed from the current set of seed matches (S21). Then new matches are searched in its 'match neighborhood' and all new matches are simultaneously added to the current set of seeds and to the set of accepted matches-under construction (S22). The neighbors pixels a and A are taken to be all pixels within the 5 x 5 window centered at a and A to ensure the continuity constraint of the matching results. For each neighboring pixel in the first image, we construct a list of tentative match candidates consisting of all pixels of a 3 x 3 window in the neighborhood of its corresponding location in the second image. Thus the displacement gradient limit should not exceed 1 pixel. This propagation procedure is carried out simultaneously from the first to the second and the first to the third image, and the propagation is constrained by the camera orientation between each pair of images. Only those that satisfy the geometric constraints of the camera system are propagated. Further, these two concurrent propagations are constrained by the three-view geometry of the camera system. Only those that satisfy the three-view geometry of the camera system are retained.

The unicity constraint of the matching and the termination of the process are guaranteed by choosing only new matches not yet accepted. Since the search space is reduced for each pixel, small 5 x 5 windows are used for ZNCC, therefore minor geometric changes are allowed.

It can be noticed that the risk of bad propagation is greatly diminished by the best first strategy over all matched seed points. Although seed selection step seems very similar to many existing methods for matching points of interest using correlation, the crucial difference is that propagation needs only to take the most reliable ones rather than taking a maximum of them. This makes our algorithm much less vulnerable to the presence of bad seeds in the initial matches. In some extreme cases, only one good match of points of interest is sufficient to provoke an avalanche of the whole textured images.

5. Re-sampling unit

Now, a re-sampling unit 15 will be described below. The dense matching obtained by match propagation unit 14 may still be corrupted and irregular, so re-sampling unit 15 will regularize the matching map and also provide a more efficient representation of images for further processing. Re-sampling unit 15 receives input of the dense matching in three images from constraint match propagation unit 14 and outputs a list of re-sampled trinocular matches.

The first image is initially subdivided into square patches by a regular grid of two different scales 8 x 8 and 16 x 16. For each square patch, we obtain all matched points of the square from the dense matching. A plane homography H is tentatively fitted to these matched points $u_i \longleftrightarrow u'_i$ of the square to look for potential planar patches. A homography in $P^2$ is a projective transformation between projective planes, it is represented by a homogeneous 3 x 3 non singular matrix such that $\lambda_i u'_i = H u_i$, where u and u' are represented in homogeneous coordinates. Because a textured patch is rarely a perfect planar facet except for manufactured objects, the putative homography for a patch cannot be estimated by standard least squares estimators. Robust methods have to be adopted, which provide a reliable estimate of the homography even if some of the matched points of the square patch are not actually lying on the common plane on which the majority lies. If the consensus for the homography reaches 75%, the square patch is considered as planar. The delimitation of the corresponding planar patch in the second and the third image is defined by mapping the four corners of the square patch in the first image with the estimated homography H. Thus, a corresponding planar patches in three images is obtained.

This process of fitting the square patch to a homography is first repeated for all square patches of the first image from the larger to the smaller scale, it turns out all matched planar patches at the end.

6 Three-view joint triangulation unit

Now, a three-view joint triangulation unit 16 will be described below. The image interpolation relies exclusively on image content without any depth information and is sensitive to visibility changes and occlusions. The three view joint triangulation is designed essentially for handling the visibility issue. Three-view joint triangulation unit 16 receives input of the re-sampled trinocular matches and outputs joint three-view triangulation. The triangulation in each image will be Delaunay because of its minimal roughness properties. The Delaunay triangulation will be necessarily constrained as we want to separate the matched regions from the unmatched ones. The boundaries of the connected components of the matched planar patches of the image must appear in all images, and therefore are the constraints for each Delaunay triangulation.

The joint three-view triangulation is defined as fulfilling the following conditions.

- There is one-to-one vertex correspondence in three images.
- The constraint edges are the boundary edge of the connected components of the matched regions in three images.
- There is one-to-one constraint edge correspondence in three images.
- In each image, the triangulation is a constraint Delaunay triangulation by the constraint edges.

7 View interpolation unit

Now, a view interpolation unit 17 will be described below. According to view interpolation unit 17, any number of in-between new images can be generated, for example, images seen from positions between a first and a second camera. These in-between images can be generated from the original three images. view interpolation unit 17 receives input of the three-view joint triangulation results and outputs any in-between image I($\alpha$, $\beta$, $\gamma$) parameterized by $\alpha$, $\beta$, and $\gamma$ such that $\alpha + \beta + \gamma = 1$.

The view interpolation processing is performed according to the following procedures.

    1. The position of the resulting triangle is first interpolated from three images.

    2. Each individual triangle is warped into the new position and a distortion weight is also assigned to the warped triangle.

    3. Each whole image is warped from its triangulation. In the absence of depth information, a warping order for each triangle is deduced from its maximum disparity to expect that any pixels that map to the same location in the generated image are arriving in back to front order as in the Paiter's method. All unmatched triangles are assigned the smallest disparity so that they are always warped before any matched triangles.

    4. The final pixel color is obtained by bleeding three weighted warped images.

Furthermore, the similar idea developed for facial image generation from 3 images could be extended to either 2 or N images with reasonable modification of the processing units. Other objects than face images could also be processed in a very similar manner.

Scenery Image Generator

As described above, the scenery image generator does not require a very high measurement precision. Therefore, it is possible to process two or more images. Now, a two-view unit performing processing based on two views and a three-view unit performing processing based on three views will be described below.

A. Two-View Unit

Figure 15 sketches out the system architecture for the two-view unit.

1 Feature point detection unit

Feature point detection units 20a, 20b each receive input of images and respectively output lists of feature points. These units are independently applied to each individual image.

2 Binocular seed finding unit

A binocular seed finding unit finds a set of reliable initial matches. The binocular seed finding unit receives input of the two lists of points of interest and outputs a list of binocular matches called seed matches. This unit is composed of two parts. The first is a correlation unit 21, which establishes a list of tentative binocular matches. The second is a robust, matching unit 22, which finalizes a list of reliable seed matches using robust methods applied to two view geometric constraint encoded by the fundamental matrix.

3 Constraint match propagation unit

Constraint match propagation unit 23 expects a maximum number of matches in two images. Constraint match propagation unit 23 receives input of the list of seed matches and outputs dense matching in three images.

This process will be described with reference to M. Lhuillier and L.Quan "Image interpolation by joint view triangulation" in Proceedings of the Conference On Computer Vision and Pattern Recognition, Fort Collins, Colorado, USA, 1999. Let M be the list of the current matched points, and B be the list of current seeds. Obviously, list B is initialized to S and list M to an empty list. At each step, the best match m $\longleftrightarrow$ m' is pulled from the set of seed matches B. Then additional matches are looked for in the neighborhood of m and m'. The neighbors of m are taken to be all pixels within the 5 x 5 window centered at m. For each neighboring pixel of the first image, it is first constructed in the second image a list of tentative match candidates that consists of all pixels of a 3 x 3 window in the neighborhood of its corresponding location in the second image. The matching criterion c(x, x') is still the correlation defined above but within a 5 x 5 window. Finally additional matches in the neighborhood of m and m' are added simultaneously in match list M and seed match list B such that the unicity constraint is preserved. The algorithm terminates when the seed match list B becomes empty.

This algorithm could be efficiently implemented with a heap data structure for the seed pixels B of the regions of the matched points.

4. Re-sampling unit

The dense matching may still be corrupted and irregular. A re-sampling unit 24 will regularize the matching map and also provide a more efficient representation of images for further processing. Re-sampling unit 24 receives input of dense matching in three images and outputs a list of re-sampled binocular matches. The processing of this unit will be described below with reference to the reference literature stated above. The brut quasi-dense matching result may still be corrupted and irregular. Although there is no rigidity constraint on the scenes, it is assumed that the scene surface is at least piecewise smooth. Therefore, instead of using global geometric constraints encoded by fundamental matrix or trifocal tensor, local geometric constraints encoded by planar homography could be used. The quasi-dense matching is thus regularized by locally fitting planar patches. The construction of the matched planar patches is described as follows.

The first image is initially subdivided into square patches by a regular grid of two different scales 8x8 and 16x16.

For each square patch, all matched points of the square are obtained from the quasi-dense matching map. A plane homography H is tentatively fitted to these matched points $u_i \longleftrightarrow u'_i$ of the square to look for potential planar patches. A homography in $P^2$ is a projective transformation between projective planes, and it is represented by a homogeneous 3 x 3 non-singular matrix such that $\lambda_i u'_i = H u_i$, where u and u' are represented in homogeneous coordinates. Each pair of matched points provides 2 homogeneous linear equations in the matrix entries $h_{ij}$. The 9 entries of the homography matrix counts only for 8 d.o.f. up to a scale, therefore 4 matched points, no three of them collinear, are sufficient to estimate the H. Because a textured patch is rarely a perfect planar facet except for manufactured objects, the putative homography for a patch can not be estimated by standard least squares estimators. Robust methods have to be adopted, which provide a reliable estimate of the homography even if some of the matched points of the square patch are not actually lying on the common plane on which the majority lies. The Random Sample Consensus (RANSAC) method originally introduced by Fischler and Bolles is used for robust estimation of the homography.

If the consensus for the homography reaches 75%, the square patch is considered as planar. The delimitation of the corresponding planar patch in the second image is defined by mapping the four corners of the square patch in the first image with the estimated homography H. Thus, a pair of corresponding planar patches in two images is obtained.

This process of fitting the square patch to a homography is first repeated for all square patches of the fast image from the larger to the smaller scale, it turns out all matched planar patches at the end. It should be noticed that the planar patches so constructed may overlap in the second image. To reduce the number of the overlapped planar patches, but not solve the problem, the corners of the adjacent planar patches are forced to coincide in a common one if they are close enough. Each planar patch could be subdivided along one of its diagonals into 2 triangles for further processing. From now on, the meaning of a matched patch is more exactly a matched planar patch, as only the matched patch that succeeds in fitting a homography will be considered.

5. Two view joint triangulation unit

The image interpolation relies exclusively on image content without any depth information, and it is sensitive to visibility changes and occlusions. The three view joint triangulation is designed essentially for handling the visibility issue. A two-view joint triangulation unit 25 receives input of the re-sampled binocular matches, and outputs joint two-view triangulation results. As image interpolation relies exclusively on image content with no depth information, it is sensitive to changes in visibility. In this section, a multiple view representation is proposed to handle the visibility issue that is herein called joint view triangulation, which triangulates simultaneously and consistently (the consistency will soon be precised) two images without any 3D input data. Triangulation has proven to be a powerful tool of efficiently representing and restructuring individual image or range data.

The triangulation in each image will be Delaunay because of its minimal roughness properties. The Delaunay triangulation will be necessarily constrained as it is desired to separate the matched regions from the unmatched ones. The boundaries of the connected components of the matched planar patches of the image must appear in both images, therefore are the constraints for each Delaunay triangulation. By consistency for the joint triangulation, it is meant that there is a one-to-one correspondence between the image vertices and a one-to-one correspondence between the constrained edges - boundaries of the matched regions.

In summary, the joint view triangulation for two views has the following properties: 1. one-to-one vertex correspondence in two images; 2. one-to-one constraint edge correspondence in two images, the constraint edges are the boundary edge of the connected components of the matched regions in two images; and 3. the triangulation in each image is a constrained Delaunay by the constraint edges.

A greedy method for joint view triangulation is a natural choice. The algorithm can be briefly described as follows.

- The joint view triangulation starts from two triangles in each image.
- Then, each matched planar triangle is incrementally inserted into each triangulation. The insertion is carried out in order, row by row from the top to the bottom of the grid. For each row, a two-pass algorithm is used for implementation ease and robustness.
- The first pass consists of examining all planar patches from left to right. If the triangle in the second image does not intersect any current matched areas, its vertices are inserted into image plane for constrained triangulation. Next, the polygonal boundary of each matched area is recomputed if the newly added triangle is connected to one of the matched areas. A triangle is connected to a matched area delineated by a polygon if it shares a common edge with the boundary polygon.
- A second pass for the current row is necessary to fill in undesirable unmatched holes that may be created during the fast pass due to the topological imitation of the data structure mentioned above.
- Completion step
  Up to this point, a consistent joint view triangulation is obtained. The structure is improved by further checking if each unmatched triangle could be fitted to an affine transformation. If an unmatched triangle succeeds in fitting an affine transformation, it is changed from an unmatched one into a matched one in the joint view triangulation.

6. View interpolation unit

Any number of in-between new images could be generated from the original three images. A view interpolation unit 26 receives input of the two-view joint triangulation results and outputs any in-between image I(λ) parameterized by λ.

Now, it is described how to generate all in-between images by interpolating the two original images. Any in-between image I(λ) is parameterized by λ∈[0, 1] and obtained by shape interpolation and texture bleeding of the two original images such that the two original images are the endpoints of the interpolation path, I(0) = I and I(l) = I'.

A three-step algorithm is given as follows.

- Warp individual triangle

The position is first interpolated for each vertex of the triangles u ←→ u' as

$$u''(\lambda) = (1 - \lambda)u + \lambda u'$$

and a weight w is assigned to each warped triangle to measure the deformation of the warped triangle. The weight w is proportional to the ratio γ of the triangle surface in the first image w.r.t. the second image bounded by l, that is ω = min(1, γ) for the triangles of the first image and ω' = min(1, 1/γ) for the triangles of the second image.

- Warp the whole image

To correctly handle the occlusion problem of patches, we could use either Z-buffer algorithm or the Painter's method in which pixels are sorted in back to front order when the depth information was available. In the absence of any depth information, a warping order for each patch is deduced from its maximum disparity to expect that any pixels that map to the same location in the generated image are arriving in back to front order as in the Painter's method. All triangular patches of the original images I and I' are warped onto I ∼ and I ∼' by first warping unmatched ones followed by matched one. The triangles whose vertices are image corners are not considered.

At first, all unmatched triangles are warped onto I ∼ and I ∼ ' as they include either holes caused by occlusion in the original images. More precisely, small unmatched triangles connecting matched and unmatched regions are warped before the others unmatched triangles, since they are most probably from different objects.

Secondly, matched triangles are warped by a heuristic order that is the decreasing order of the maximum displacement of the triangle.

- Color interpolation

The final pixel color is obtained by bleeding two weighted warped images I ∼ and I ∼':

$$I''(u) = \frac{(1 - \lambda)\omega(u)\bar{I}(u) + \lambda\omega'(u)\bar{I}'(u)}{(I - \lambda)\omega(u) + \lambda\omega'(u)}.$$

B. Three-view unit

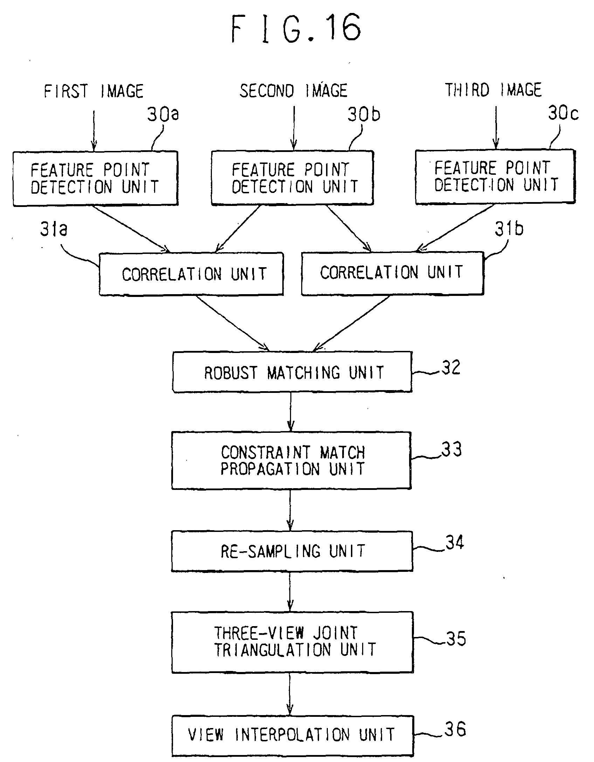

A three-view unit will be described with reference to Fig. 16.

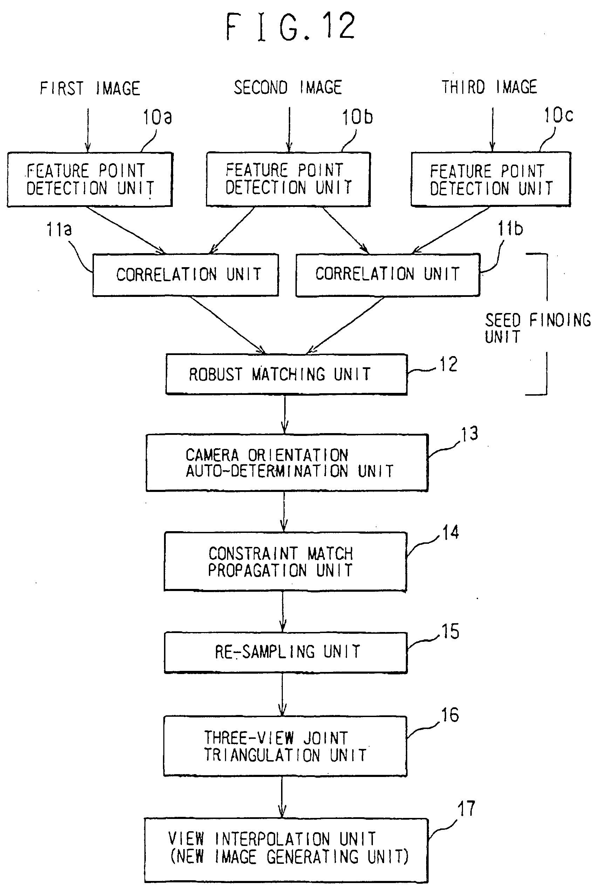

The apparatus in Fig. 16 is similar to that in Fig. 12, but differs in that it does not comprise camera orientations auto-determination unit 13. The descriptions of feature point detection unit 30, correlation unit 31, constraint match propagation unit 33, re-sampling unit 34, three-view joint triangulation unit 35 and view interpolation unit 36 will be omitted as they are the same as described above.

Robust matching unit 32 receives input of a list of potential trinocular matches and outputs a list of reliable seed trinocular matches. A robust statistics method based on random sampling of 7 or 8 trinocular matches in three images is used to estimate the whole components of the three-view matching constraints (encoded by fundamental matrices and trifocal tensor) to remove the outliers of trinocular matches.

As described above, it is possible to gain the correspondence of feature points common to a plurality of images showing a common object. It is also possible to gain the three-dimensional shape of such object based on such correspondence. Particularly, when three cameras are used, processing under the constraints of camera positions and directions is possible with high precision. By utilizing this processing, the morphing process can be performed automatically, and images of objects seen from a predetermined view can be easily generated. The apparatus/method according to the embodiments of the present invention are widely applicable to so-called computer vision.

Furthermore, the similar idea developed for facial image generation from 3 images could be extended to either 2 or N images with reasonable modification of the processing units. Other objects than face images could also be processed in a very similar manner.

Needless to say, the present invention is not limited to the embodiment described above and may be varied within the scope of the invention described in the claims, and such variations are included within the scope of the present invention.

As used herein, means is not limited to physical means but includes cases where the functions of such means are realized through software. Furthermore, the functions of one means may be realized through two or more physical means, and the functions of two or more means may be realized through one physical means.

**Claims**

1. A three-dimensional image supply system comprising:

   a three-dimensional model database that stores a three-dimensional model pertaining to a target object;

   a viewpoint setting unit that sets a viewpoint from which to view said target object;

   an image generating unit that generates an image of said target object viewed from said viewpoint based on the three-dimensional model database;

   a tracking unit that tracks said viewpoint; and

   an analyzing unit that performs analysis of the preferences of the user that set said viewpoint positions, based on the output from said tracking unit.

2. A three-dimensional image supply system according to claim 1, further comprising an image editing unit that edits the image of said target object generated by said image generating unit.

3. A three-dimensional image supply system according to claim 1, wherein said analyzing unit analyzes the preferences of the user through analysis of the locus drawn by said viewpoints.

4. A three-dimensional image supply system according to claim 1, wherein when the user sets a plurality of viewpoints, said analyzing unit analyzes the preferences of the user by seeking statistics regarding the positions of said viewpoints.

5. A three-dimensional image supply system comprising:

   a three-dimensional model generating unit that receives two or more images of the same target object viewed from different viewpoints and generates a three-dimensional model pertaining to said target object;

   a three-dimensional model database that stores said three-dimensional model;

   a viewpoint setting unit that sets a viewpoint from which to view said target object; and

   an image generating unit that generates an image of said target object viewed from said viewpoint based on said three-dimensional model database.

6. The three-dimensional image supply system according to claim 5, wherein said three-dimensional model generating unit comprises:

   a corresponding point search unit that seeks points of correspondence between said two or more images pertaining to said target object represented in said two or more images;

   a three-dimensional shape recognition unit that recognizes the three-dimensional shape of said target object based on the output from said corresponding point search unit; and

   a geometric calculation unit that reproduces said target object based on the results of recognition by said three-dimensional shape recognition unit.

7. The three-dimensional image supply system according to claim 5, further comprising an image editing unit that edits the image of said target object generated by said image generating unit.

8. A three-dimensional image supply system comprising:

   a three-dimensional model generating unit that receives two or more images of the same target object viewed from different viewpoints and generates a three-dimensional model pertaining to said target object;

   a viewpoint setting unit that sets the viewpoint from which to view said target object; and

   an image generating unit that generates an image of said target object viewed from said viewpoint based on said three-dimensional model.

9. The three-dimensional image supply system according to claim 8, wherein said three-dimensional model generating unit comprises:

a corresponding point search unit that seeks points of correspondence between said two or more images pertaining to said target object represented in said two or more images;

a three-dimensional shape recognition unit that recognizes the three-dimensional shape of said target object based on the output from said corresponding point search unit; and

a geometric calculation unit that reproduces said target object based on the results of recognition by said three-dimensional shape recognition unit.

10. The three-dimensional image supply system according to claim 8, further comprising an image editing unit that edits the image of said target object generated by said image generating unit.

11. A morphing image supply system comprising:

a morphing data generating unit that receives two or more images pertaining to different target objects and seeks the correspondences between said images;

a morphing database that stores the correspondences between said two or more images;

a mixture ratio setting unit that sets the mixture ratio for said two or more images; and

an image generating unit that generates an image in which the two or more images are mixed according to said mixture ratio based on said morphing database.

12. The morphing image supply system according to claim 11, wherein said morphing data generating unit comprises:

a corresponding point search unit that seeks points of correspondence between said two or more images pertaining to said target object represented in said two or more images; and

a geometric calculation unit that reconstructs said two or more images based on the output from said corresponding point search unit.

13. The morphing image supply system according to claim 11, further comprising an image editing unit that edits the synthesized image generated by said image generating unit.

14. A three-dimensional image supply method comprising:

a step for obtaining and transmitting two or more images of the same target object viewed from different viewpoints;

a step for generating a three-dimensional model pertaining to said target object based on said two or more images;

a step for setting a viewpoint from which to view said target object;

a step for generating an image viewed from said viewpoint based on said three-dimensional model; and

a step for transmitting the generated image.

15. A three-dimensional image supply method comprising:

a step for receiving an image processing program and enabling it to be executed on a computer;

a step for executing said image processing program and generating a three-dimensional model pertaining to said target object based on two or more images of the same target object viewed from different viewpoints;

a step for setting the viewpoint from which to view said target object;

a step for generating an image viewed from said viewpoint based on said three-dimensional model;

a step for displaying the generated image; and

a step for transmitting information regarding said viewpoint.

16. The three-dimensional image supply method according to claim 14 or 15, further comprising:

a step for tracking the movement of said set viewpoint;

a step for analyzing the preferences of the user that set said viewpoint positions, based on the movement of said viewpoint; and

a step for transmitting the results of said analysis.

17. A three-dimensional image supply method comprising:

a step for generating a three-dimensional image using a three-dimensional model database that resides on a server;

a step for creating an e-mail message that includes information on the method for accessing said three-dimensional image;

a step for transmitting the e-mail message;

a step for receiving the e-mail message;

a step for obtaining said three-dimensional image using a specified access method; and

a step for displaying said three-dimensional image together with the e-mail message.

**18.** A morphing image supply method comprising:

a step for obtaining and transmitting two or images of different target objects;

a step for seeking the correspondences between said two or more images and generating a morphing database;

a step for setting the mixture ratio for said two or more images used for morphing;

a step for mixing said two or more images based on said morphing database according to said mixture ratio and generating a morphing image; and

a step for transmitting the generated image.

**19.** The morphing image supply method according to claim 18, further comprising:

a step for tracking said set mixture ratio;

a step for analyzing said mixture ratio and analyzing the preferences of the user that set said mixture ratio; and

a step for transmitting the results of said analysis.

**20.** A computer program comprising program code means adapted to perform all of the steps of the method according to any of claims 14 to 19 when run on computer apparatus forming a three-dimensional image supply system.

# FIG.1A

CLIENT                               SERVER

A:TWO IMAGES

B:GENERATION OF
THREE-DIMENSIONAL
MODEL

C:
VIEWPOINT
SETTING

D:VIEWPOINT
INFORMATION

E:GENERATION OF
THREE-DIMENSIONAL
IMAGE

F:THREE-DIMENSIONAL
IMAGE

G:VIEWPOINT TRACKING
AND ANALYSIS

# FIG.1B

CLIENT                               SERVER

H:TWO IMAGES

I:IMAGE PROCESSING
PROGRAM(JAVA)

J:
GENERATION OF
THREE-DIMENSIONAL
MODEL

K:
VIEWPOINT SETTING

M:VIEWPOINT
INFORMATION

L:
GENERATION OF
THREE-DIMENSIONAL
IMAGE

N:
VIEWPOINT TRACKING
AND ANALYSIS

# FIG. 2

SERVER

P1

IMAGE A

IMAGE B

P2

T

1a

1b

P

PERSONAL COMPUTER (CLIENT) — 2

COMMUNICATION MEANS — 3

CORRESPONDING POINT SEARCH UNIT — 4

THREE-DIMENSIONAL SHAPE RECOGNITION UNIT — 5

GEOMETRIC CALCULATION UNIT — 6

THREE-DIMENSIONAL MODEL DATABASE — 7

IMAGE EDITING UNIT — 9

IMAGE GENERATING UNIT — 8

VIEWPOINT SETTING UNIT — 10

VIEWPOINT TRACKING UNIT — 11

ANALYZING UNIT — 12

TO VIEWPOINT INFORMATION USER

# F I G . 3

OBTAIN TWO OR MORE IMAGES
OF SAME TARGET OBJECT VIEWED
FROM DIFFERNT VIEWPOINTS,
SEND TO SERVER — S1

SERVER GENERATES
THREE-DIMENSIONAL MODEL — S2

CLIENT ACCESSES SERVER-SIDE
THREE-DIMENSIONAL MODEL
DATABASE — S3

CLIENT SETS VIEWPOINT — S4

TRACK MOVEMENT
OF VIEWPOINT — S10

SERVER GENERATES IMAGE
VIEWED FROM SET VIEWPOINT — S5

ANALYZE MOVEMENT
OF VIEWPOINT — S11

EDIT GENERATED IMAGE — S6

TRANSMIT RESULTS
OF ANALYSIS — S12

TRANSMIT EDITED
IMAGE TO CLIENT — S7

DISPLAY IMAGE ON CLIENT — S8

FIG.4A

FIG.4B

# F I G . 5

THREE-DIMENSIONAL
IMAGE E-MAIL MESSAGE

```
┌─────────────────────────┐
│ CREATE PRESCRIBED        │
│ THREE-DIMENSIONAL IMAGE  │  ～S20
│ USING SERVER-SIDE        │
│ THREE-DIMENSIONAL MODEL  │
│ DATABASE                 │
└─────────────────────────┘
             │
             ▼
┌─────────────────────────┐
│ CREATE E-MAIL MESSAGE    │
│ INCLUDING METHOD FOR     │
│ ACCESSING THE            │  ～S21
│ THREE-DIMENSIONAL        │
│ IMAGE (A URL, ETC.)      │
└─────────────────────────┘
             │
             ▼
┌─────────────────────────┐
│ TRANSMIT E-MAIL MESSAGE  │  ～S22
└─────────────────────────┘
             │
             ▼
┌─────────────────────────┐
│ RECEIVE E-MAIL MESSAGE   │  ～S23
└─────────────────────────┘
             │
             ▼
┌─────────────────────────┐
│ OBTAIN THREE-DIMENSIONAL │
│ IMAGE USING SPECIFIED    │  ～S24
│ ACCESS METHOD            │
└─────────────────────────┘
             │
             ▼
┌─────────────────────────┐
│ DISPLAY THREE-DIMENSIONAL│
│ IMAGE TOGETHER WITH MESSAGE│ ～S25
└─────────────────────────┘
```

# F I G . 6

# FIG. 7

# FIG.8

OBTAIN TWO OR MORE IMAGES OF DIFFERENT TARGET OBJECTS VIEWED FROM DIFFERENT VIEWPOINTS, SEND TO SERVER — S31

SERVER GENERATES MORPHING DATABASE — S32

CLIENT ACCESSES SERVER-SIDE DATABASE — S33

CLIENT SETS MIXTURE RATIO — S34

SERVER GENERATES IMAGE BASED ON SET MIXTURE RATIO — S35

EDIT GENERATED IMAGE — S36

TRANSMIT EDITED IMAGE TO CLIENT — S37

DISPLAY IMAGE ON CLIENT — S38

TRACK MIXTURE RATIO — S40

ANALYZE MIXTURE RATIO — S41

TRANSMIT RESULTS OF ANALYSIS — S42

26

# FIG. 9

```
OBTAIN TWO OR MORE IMAGES  A, B, ···        S1
SEEN FROM TWO OR MORE DIFFERENT
VIEWPOINTS
```

```
CALCULATE CORRESPONDENCE BETWEEN           S2
FEATURE POINTS IN IMAGES  A, B, ···
```

```
CALCULATE DIFFERENCES BETWEEN              S3
CORRESPONDING FEATURE POINTS IN
IMAGES  A, B, ···
```

```
SORT BY DIFFERENCE                         S4
```

```
DRAW IN ORDER FROM SMALL TO LARGE          S5
DIFFERENCE
```

# FIG 10

## (a)

## (b)

# F I G. 11

## (a)

## (b)

# F I G. 12

FIRST IMAGE          SECOND IMAGE          THIRD IMAGE

10a          10b          10c

FEATURE POINT
DETECTION UNIT

FEATURE POINT
DETECTION UNIT

FEATURE POINT
DETECTION UNIT

11a          11b

CORRELATION UNIT          CORRELATION UNIT

SEED FINDING
UNIT

ROBUST MATCHING UNIT          12

CAMERA ORIENTATION
AUTO-DETERMINATION UNIT          13

CONSTRAINT MATCH
PROPAGATION UNIT          14

RE-SAMPLING UNIT          15

THREE-VIEW JOINT
TRIANGULATION UNIT          16

VIEW INTERPOLATION UNIT
(NEW IMAGE GENERATING UNIT)          17

# F I G.13

PROCEDURES OF DETERMINING
CAMERA ORIENTATIONS

CONVERT 2 D AFFINE CAMERA TO 1 D PROJECTIVE CAMERA — S11

EXTRACT EPIPOLES — S12

DETERMINE CAMERA MATRICES AND CAMERA CENTERS — S13

UPDATE PROJECTIVE STRUCTURE — S14

DETERMINE CAMERA ORIENTATION PARAMETERS — S15

# F I G.14

PROCEDURES OF MATCH PROPAGATION

REMOVE MATCH WITH BEST Z N C C SCORE FROM INITIAL SEED MATCHES — S21

FIND NEW MATCH IN "MATCH NEIGHBORHOOD" AND ADD TO MATCH SET — S22

# F I G. 15

FIRST IMAGE    SECOND IMAGE

20a

20b

FEATURE POINT
DETECTION UNIT

FEATURE POINT
DETECTION UNIT

21a — CORRELATION UNIT

BINOCULAR SEED
FINDING UNIT

ROBUST MATCHING UNIT ~22

CONSTRAINT MATCH
PROPAGATION UNIT ~23

RE-SAMPLING UNIT ~24

TWO-VIEW JOINT
TRIANGULATION UNIT ~25

VIEW INTERPOLATION UNIT ~26

# F I G.16

FIRST IMAGE    SECOND IMAGE    THIRD IMAGE

30a    30b    30c

| FEATURE POINT DETECTION UNIT | FEATURE POINT DETECTION UNIT | FEATURE POINT DETECTION UNIT |

31a    31b

CORRELATION UNIT    CORRELATION UNIT

ROBUST MATCHING UNIT — 32

CONSTRAINT MATCH PROPAGATION UNIT — 33

RE-SAMPLING UNIT — 34

THREE-VIEW JOINT TRIANGULATION UNIT — 35

VIEW INTERPOLATION UNIT — 36

FIG.17